Europäisches Patentamt

European Patent Office

Office européen des brevets

(11) Publication number: **0 425 688 A1**

# EUROPEAN PATENT APPLICATION
## published in accordance with Art. 158(3) EPC

(21) Application number: 90906336.4

(22) Date of filing: 13.04.90

(86) International application number:
PCT/JP90/00492

(87) International publication number:
WO 90/13072 (01.11.90 90/25)

(51) Int. Cl.⁵: G05B 19/05

(30) Priority: 18.04.89 JP 98164/89

(43) Date of publication of application:
08.05.91 Bulletin 91/19

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: TANAKA, Kunio

5-8-13, Tamagawacho, Akishima-shi
Tokyo 196(JP)
Inventor: WATANABE, Toru, FANUC Dai-3
Vira-karamatsu
3527-1, Shibokusa,Oshinomura
Minamitsuru-gun,Yamanashi 401-05(JP)

(74) Representative: Brunner, Michael John et al
GILL JENNINGS & EVERY 53-64 Chancery
Lane
London WC2A 1HN(GB)

(54) **METHOD OF EDITING PROGRAM FOR PROGRAM CONTROLLER.**

(57) A method of editing a sequence program of PC (programmable controller). A programming apparatus (1) sorts symbols of signals in the sequence program and stores them in a first symbol table (5a) and in a second symbol table (5b). The sequence program and the symbols stored in the first symbol table (5a) are transferred to the PC(PMC) which edits the sequence program. At this time, the editing is executed based chiefly upon the signals of symbols stored in the first symbol table (5a). If necessary, the sequence program is returned to the programming apparatus (1), the symbols of the signals to be edited next are sent to the first symbol table (5a), and the sequence program is transferred again to the PC (PMC) together with the symbol table thereof to edit it. This makes it possible to edit the sequence program using the PC (PMC) having a small symbol region.

F I G. 1

## PC PROGRAM EDITING SYSTEM

Technical Field

The present invention relates to a PC program editing system for editing a sequence program of a PC (programmable controller), and more particularly, to a PC program editing system in which only some signal symbols are transferred to the PC when editing the sequence program.

Background Art

In a PC (programmable controller) used in a machine tool or the like, a sequence program is prepared by a programming apparatus called an off-line programmer. Although this sequence program also can be edited by the programming apparatus, the final editing is made with the program actually loaded in the PC. Note, editing the sequence program includes a debugging of the sequence program.

When editing the sequence program, a symbol is affixed to each signal, to facilitate the operation, and because the capacity of a data memory in the programming apparatus is usually large, there are no restrictions on hardware despite the use of many symbols.

Due to restrictions on the PC hardware, however, there are few transferable symbols, and the size of a symbol table in the programming apparatus generally corresponds to the number of symbols.

Accordingly, many signal symbols cannot be stored, and the sequence program prepared before the debugging cannot be transferred directly to the PC to be edited, and thus, the editing must be effected with a reduced number of signal symbols, which is very inconvenient. Therefore, the greater the number of symbols, the easier the preparation of maintenance drawings and the like.

Disclosure of the Invention

The present invention has been created in consideration of the above circumstances, and an object thereof is to provide a PC program editing system capable of registering and editing as many symbols as possible, without being subject to hardware restrictions.

To achieve the above object of the present invention, there is provided a PC program editing system for editing a sequence program of a PC (programmable controller), which comprises the steps of dividedly storing the symbols of signals from the sequence program in a first symbol table and a second symbol table by a programming apparatus, transferring the sequence program and the symbols stored in the first symbol table to the PC, and editing the sequence program by the PC.

The symbols of the unedited signals are dividedly stored in the two symbol tables, and the sequence program and the symbols stored in the first symbol table are transferred to the PC to be edited. In this case, the execution of the editing is centered around the signals of the symbols stored in the first symbol table.

If necessary, the sequence program is returned to the programming apparatus, the symbols in the first symbol table are replaced with the symbols of signals to be edited next, and the sequence program, together with this symbol table, is again transferred to the PC to be edited.

Brief Description of the Drawings

Fig. 1 is a block diagram of a programming apparatus for effecting the present invention;
Fig. 2 is a partial block diagram of a numerical control device for effecting the present invention; and
Fig. 3 is a diagram showing a symbol setting screen.

Best Mode of Carrying Out the Invention

One embodiment of the present invention will now be described with reference to the drawings.

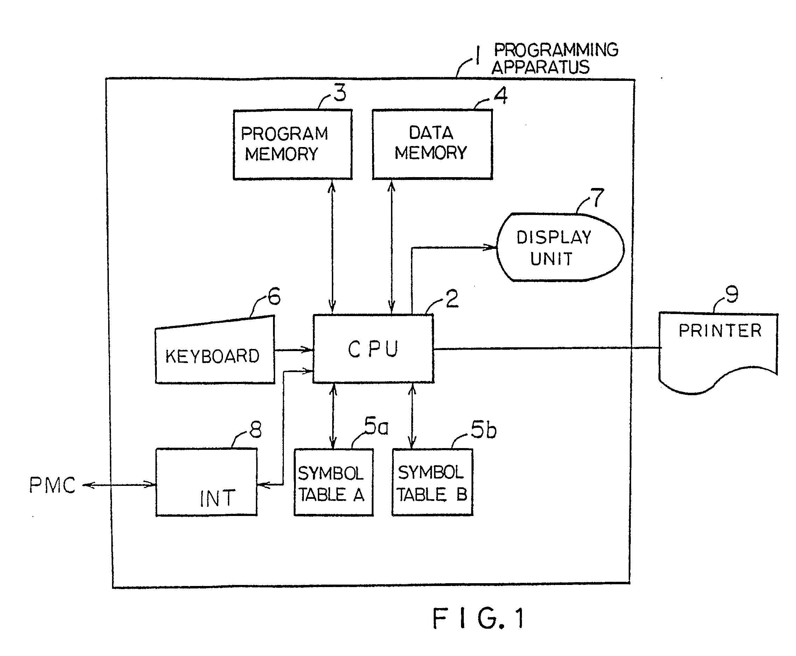

Figure 1 is a block diagram of a programming apparatus for effecting the present invention. The programming apparatus 1 is composed mainly of a processor 2, to which a program memory 3 and a data memory 4 are connected. The program memory 3 stores a system program for carrying out the functioning of the programming apparatus 1, and the data memory 4 stores a sequence program prepared in the programming apparatus 1. The sequence program is input through a keyboard 6, and is displayed on a display unit 7 as required. Alternatively, the sequence program can be printed out by a printer 9. Although the sequence program is prepared in a ladder language, it may be prepared by using another high-level language, such as PASCAL.

Symbols are affixed to signals in the sequence program, and these symbols are dividedly stored in symbol tables A5a and B5b. Only those symbols stored in the symbol table A5a are delivered, together with the sequence program, to the PMC side, because a memory area for storing the symbols on the PMC side for editing the sequence program is small, as mentioned later. Accordingly, the debugging of the sequence program on the PMC side is centered only around those signals which have symbols stored in the symbol table A5a. When further editing other portions, the sequence program is temporarily returned to the programming apparatus 1, the contents of the symbol table A5a are modified, and the sequence program, together with the symbols newly stored in the symbol table A5a, are again delivered to the PMC side.

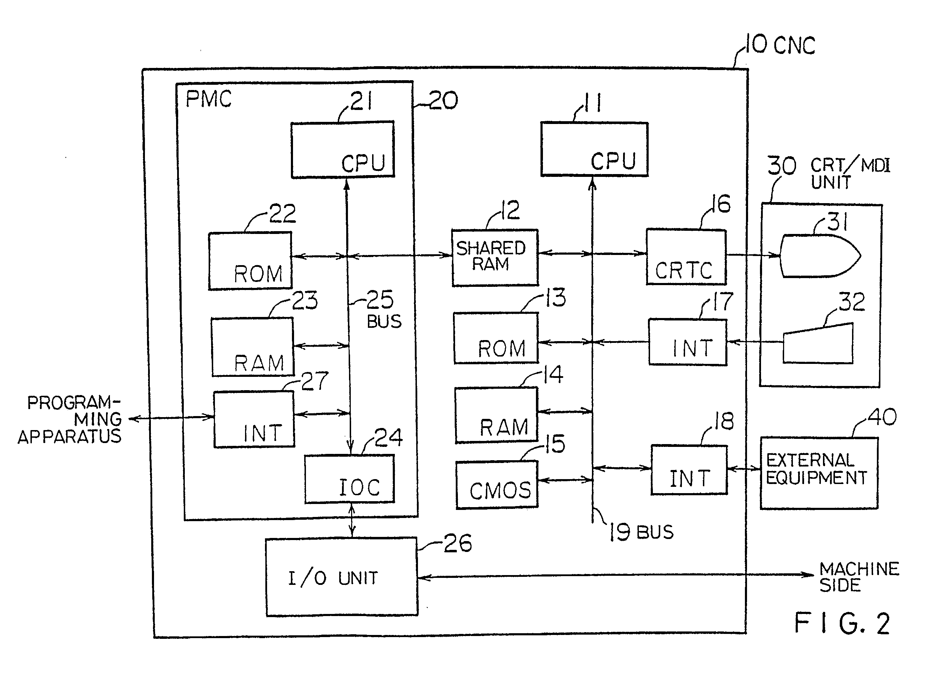

Figure 2 is a partial block diagram of a numerical control device for effecting the present invention. A PMC (programmable machine controller) 20 is contained in the numerical control device (CNC) 10, and a processor 11, which is a central processor for the global control of the numerical control device (CNC) 10, reads out a system program in a ROM 13 through a bus 19, and executes the global control of the numerical control device (CNC) 10 in accordance with the system program. A shared RAM 12 is used for transferring data between the CNC 10 and the PMC 20, and stores necessary data for access from both sides.

A RAM 14 stores temporary calculation data, and display data, etc., and a CMOS 15, which is a nonvolatile memory, stores the tool correction value, pitch error correction value, machining program, and parameters, etc. The CMOS 15 is backed up by a battery (not shown), and thus retains data stored therein even when the main power supply to the numerical control device (CNC) 10 is cut off. Also, the CMOS 15 stores parameters and the like required on the PMC 20 side.

A graphic control circuit 16 converts digital data, such as the current position of each axis, alarms, parameters, and picture data, etc., into picture signals, and outputs these picture signals to a display unit 31 of a CRT/MDI unit 30, to be displayed at the display unit 31. An interface 17 receives data from a keyboard 32 in the CRT/MDI unit 30, and outputs this data to the processor 11.

An external-equipment interface 18 is connected with external equipment 40, which includes a paper tape reader, paper tape puncher, paper tape reader/puncher, and printer, etc. A machining program read from the paper tape reader or edited in the numerical control device (CNC) 10 can be output to the paper tape puncher.

The processor 11 and the elements including the shared RAM 12, ROM 13, etc., are interconnected by the bus 19.

An axis control circuit for controlling a servomotor and the like, spindle control circuit, spindle amplifier, and manual pulse generator interface, etc., are omitted from Fig. 2.

The PMC (programmable machine controller) 20 is provided with a PMC processor 21, which is connected to the shared RAM 12 by a bus 25, and the shared RAM 12 is connected to the bus 19 of the CNC 10.

A ROM 22 is also connected to the bus 25, and stores a monitor program for controlling the PMC 20 and an edited sequence program. Although the sequence program is generally prepared in the ladder language, it may be prepared by using a high-level language such as PASCAL. In some cases, moreover, a ROM-cassette interface may be provided in place of the ROM 22, and a ROM cassette, which stores the edited sequence program, connected to the ROM-cassette interface. This arrangement enables the sequence program to be easily leveled up or modified.

Further, a RAM 23 is connected to the bus 25, and an unedited sequence program from the programming apparatus 1 is transferred to the RAM 23 and edited. The display unit 31 and the keyboard 32 of the CRT/MDI unit 30 are also used to edit the sequence program. Furthermore, the symbols stored in the symbol table A5a are transferred from the programming apparatus 1 to the RAM 23. The unedited sequence program and the symbols from the programming apparatus 1 are transmitted through an interface 27 before being stored in the RAM 23, and input and output signals are also stored in the RAM 23.

An I/O control circuit 24 is connected to the bus 25, whereby an output signal stored in the RAM 23 is converted into a serial signal, which is output to an I/O unit 26. Further, a serial input signal from the I/O unit 26 is converted into a parallel signal, which is delivered to the bus 25, and this signal is stored in the RAM 23 by the processor 21.

The processor 21 receives a command signal, such as an M-function command or T-function command, from the CNC 10 via the shared RAM 12, temporarily stores the command in the RAM 23, processes the command in accordance with the sequence program stored in the ROM 22, and outputs the processed command to the I/O unit 26 via the I/O control circuit 24, whereupon the hydraulic, pneumatic, and electromagnetic apparatuses on the machine side are controlled in accordance with this output signal.

Further, the processor 21 receives an input signal, such as a limit switch signal on the machine side or a signal from a control switch of a machine operator panel, through the I/O unit 26, and temporarily stores this input signal in the RAM 23. Those input signals which need not be processed in the PMC 20 are transmitted through the shared RAM 12 to the processor 11, and other signals are processed in accordance with the sequence program; some are output to the CNC side, and the others are sent as output signals from the I/O unit 26 to the machine side via the I/O control circuit 24.

The sequence program stored in the RAM 23 can be displayed at the display unit 31 of the CRT/MDI unit 30, to be modified by using the keyboard 32.

During the editing operation, the sequence program in the RAM 23 can be printed out through the bus 19 by the printer connected to the interface 18.

Accordingly, the sequence program prepared by the programming apparatus 1 can be stored in the RAM 23 of the PMC 20, and edited by operating the CNC 10 and the PMC 20. In this case, all of the symbols used belong to the symbol table A5a, and the editing is centered around that portion of the sequence program corresponding to the symbols concerned.

When editing another portion of the sequence program after the previous editing is finished, the sequence program is returned to the programming apparatus 1, the symbols of signals required for the portion to be newly edited are entered in the symbol table A5a, the sequence program and these symbols are again transferred to the RAM 23 of the PMC 20, and the sequence program is edited. This process is repeated as required, and after the editing is completed, the sequence program is written in a ROM, which is then mounted to the PMC 20 as the ROM 22, thereby providing a system for the CNC 10.

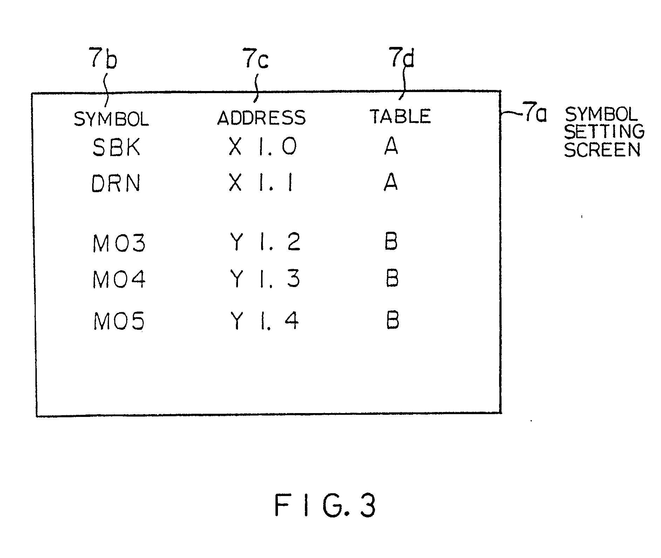

Figure 3 shows an example of a symbol setting screen. The symbol setting screen 7a of the display unit 7 is divided into areas for signal symbols 7b, for addresses 7c, and for columns 7d for the assignment of the table A or B. A programmer calls up a display of the symbol setting screen at the display unit 7, and assigns the symbol table A5a or B5b for the symbols. The symbols set in the symbol table A5a are delivered to the RAM 23 of the PMC 20, and can be used during the editing by the PMC 20. At this stage, the symbols stored in the symbol table B5b cannot be used for the editing by the PMC 20.

The capacity of the symbol table A5a is equivalent to the size of the symbol region which can be stored in the RAM 23 in the PMC 20. Accordingly, the programmer selects the symbol of the most necessary signal for the portion to be edited, and designates the symbol table A5a on the symbol setting screen 7a.

After the editing of the specified portion is finished, the sequence program is returned to the programming apparatus, the symbol is again set on the signal symbol setting screen, and the sequence program is delivered to the PMC 20 to be edited. During the operation described above, the programming apparatus can prepare debugging data and maintenance drawings by using all of the symbols, regardless of the symbols output to the PMC 20.

In the arrangement described above, the PMC (programmable machine controller) contained in the numerical control device (CNC) is used as the PC. It is easily understood, however, that the present invention may be also applied to an independent PC (programmable controller) with the same result.

According to the present invention, as described above, the signal symbols are distributed to the two symbol tables so that the symbols usable in the editing by the PC can be selected, and thus the sequence program can be efficiently edited while using the necessary signal symbols, even in a PC with a small symbol storage area.

## Claims

1. A PC program editing system for editing a sequence program of a PC (programmable controller), comprising the steps of:
dividedly storing symbols of signals from the sequence program in a first symbol table and a second symbol table by means of a programming apparatus;
transferring the sequence program and the symbols stored in the first symbol table to the PC; and
editing the sequence program by means of the PC.

2. A PC program editing system according to claim 1, wherein said sequence program is returned to the programming apparatus after being edited by means of the PC, the symbols in the first symbol table are replaced with new symbols, the sequence program and the symbols stored in the first symbol table are delivered to the PC, and the sequence program is edited by means of the PC.

3. A PC program editing system according to claim 1, wherein said PC is a PMC (programmable machine controller) contained in a numerical control device (CNC).

F I G. 1

EP 0 425 688 A1

FIG. 2

EP 0 425 688 A1

| | SYMBOL (7b) | ADDRESS (7c) | TABLE (7d) |
|---|---|---|---|
| | SBK | X1.0 | A |
| | DRN | X1.1 | A |
| | MO3 | Y1.2 | B |
| | MO4 | Y1.3 | B |
| | MO5 | Y1.4 | B |

7a SYMBOL SETTING SCREEN

FIG. 3

EP 0 425 688 A1

# INTERNATIONAL SEARCH REPORT

International Application No  PCT/JP90/00492

## I. CLASSIFICATION OF SUBJECT MATTER (if several classification symbols apply, indicate all) 6

According to International Patent Classification (IPC) or to both National Classification and IPC

Int. Cl$^5$     G05B19/05

## II. FIELDS SEARCHED

### Minimum Documentation Searched 7

| Classification System | Classification Symbols |
|---|---|
| IPC     · | G05 19/05 |

### Documentation Searched other than Minimum Documentation to the Extent that such Documents are Included in the Fields Searched 8

Jitsuyo Shinan Koho         1932-1990
Kokai Jitsuyo Shinan Koho   1971-1990

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 62-254205 (Mitsubishi Electric Corporation) 6 Nobember 1987 (06. 11. 87) (Family:none) | 1-3 |
| A | JP, U, 61-37548( Toyota Motor Corp.) 8 March 1986(08.03.86)  (Family: none) | 1-3 |
| Y | JP, A, 63-204405 (Omron Corporation) 24 August 1988 (24.08.88)  (Family: none) | 1-3 |
| Y | JP, A, 63-172303 (Toshiba Corp.) 16 July 1988 (16.07.88)   (Family: none) | 1-3 |

* Special categories of cited documents: 10
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| July 2, 1990    (02.07.90) | July 16, 1990 (16.07.90) |
| International Searching Authority | Signature of Authorized Officer |
| Japanese Patent office | |

Form PCT ISA/210 (second sheet) (January 1985)